# EUROPÄISCHE PATENTSCHRIFT

(11) **EP 4 112 468 B1**
(45) Veröffentlichungstag und Bekanntmachung des Hinweises auf die Patenterteilung: **29.05.2024**
(21) Anmeldenummer: 21183563.2
(22) Anmeldetag: 02.07.2021
(51) Int. Cl.: B64D 11/06, B60N 2/90

(54) **AUFBLASBARER TRENNBEREICH FÜR EINEN FAHRZEUGINNENRAUM**
INFLATABLE SEPARATION AREA FOR A VEHICLE INTERIOR
ZONE DE SÉPARATION GONFLABLE POUR UN HABITACLE DE VÉHICULE

(43) Veröffentlichungstag der Anmeldung: 04.01.2023
(73) Patentinhaber: Airbus Operations GmbH, 21129 Hamburg (DE)
(72) Erfinder: GIESA, Hans-Gerhard, 21129 Hamburg (DE); HAENEL, Beke, 21129 Hamburg (DE); GROM, Maximilian, 21129 Hamburg (DE); THIELBEER, Kathrin, 21129 Hamburg (DE); MADER, Jacqueline, 21129 Hamburg (DE); WILD, Stefan, 21129 Hamburg (DE)
(74) Vertreter: Isarpatent

(56) Entgegenhaltungen:
- EP-A1- 3 272 643
- WO-A2-2008/008910
- CN-B- 102 261 128
- CN-Y- 2 547 820
- US-B1- 10 888 479

## Beschreibung

Die vorliegende Erfindung betrifft einen aufblasbaren Trennbereich für einen Fahrzeuginnenraum, insbesondere für eine Passagierkabine eines Luftfahrzeugs.

Im Flugzeugdesign und Flugzeugbau gibt es kontinuierlich Bestrebungen, die Produktionseffizienz und -kosten, den Montageaufwand und die Montagezeit sowie die Nachhaltigkeit zu verbessern und das Gesamtgewicht bei gleichbleibender oder verbesserter Bauteilperformance zu reduzieren, wobei jederzeit ein besonderer Fokus auf Komfort und Sicherheit der Passagiere gelegt wird. In den letzten Jahren gab es in der Luftfahrtindustrie vereinzelte Versuche, aufblasbare Strukturen als gewichtssparende Lösungen für den Innen- und Außenbereich von Flugzeugen zu nutzen. Aufblasbare Komponenten sind in anderen Technologiebereichen bereits weit verbreitet, z. B. in der Freizeitindustrie und im Campingbereich, wo sie unter anderem aufblasbare Zelte, Sitz- und/oder Liegevorrichtungen, schwimmfähige Vorrichtungen und so weiter umfassen. Um solche Strukturen im Bereich der Luftfahrt einsetzen zu können, sind jedoch zusätzliche Herausforderungen zu bewältigten. Unter anderem ist relativ großen Druckunterschieden zu wiederstehen. Bevorzugte Materialien sind nachhaltig und langlebig und erfüllen sämtliche Sicherheitsanforderungen beispielsweise hinsichtlich der Entflammbarkeit. Außerdem wäre es wünschenswert, die Geometrie der aufblasbaren Vorrichtungen im aufgeblasenen Zustand möglichst stabil zu gestalten.

Als Beispiel für eine solche aufblasbare Vorrichtung beschreibt die Druckschrift EP 3 272 643 A1 eine aufblasbare Trennwand für ein Flugzeug, die in einer Passagierkabine installiert werden kann, um den Raum in verschiedene Abschnitte oder Bereiche zu unterteilen.

Als weiteres Beispiel beschreiben die Druckschriften EP 2 139 764 B1 und EP 2 554 477 B1 eine Schlafkoje mit plattenförmigen Luftkammern, welche eine selbsttragende Wandstruktur mit Seitenwänden und Decke bilden, wobei die Luftkammern durch flexibles flächiges Material umschlossen sind und in ihrem Innenraum flexible Stege zur Stabilisierung einer Außenform aufweisen. Die Schlafkoje weist eine Bodenschale mit aufrecht stehenden Wandansätzen auf, auf welche die Wandstruktur nachträglich aufsetzbar ist.

Weiterhin beschreibt die Druckschrift US 10,888,479 B1 eine Biosicherheitskabine zum Schutz der Insassen eines Fahrzeugs vor Krankheitserregern. Die Biosicherheitskabine umfasst ein rigides oder flexibles Schutzabdeckungselement aus einem haltbaren und ggf. feuerfesten Material, z.B. Glas, Plexiglas oder Kunststoff, welches eine dreidimensionale Struktur bildet, die im Inneren des Fahrzeugs installiert ist und die einen oder mehrere Insassen der Biosicherheitskabine von anderen Insassen des Fahrzeugs isoliert. An dem Schutzabdeckungselement ist eine Vielzahl von Verbindungselementen angebracht, über welche das Schutzabdeckungselement im Inneren des Fahrzeugs befestigt ist. Darüber hinaus umfasst das Schutzabdeckungselement Luftzirkulationsöffnungen zum Anschluss an eine Luftfiltervorrichtung sowie ein Eingangs-/Ausgangselement zum Betreten bzw. Verlassen der Biosicherheitskabine durch das Schutzabdeckungselement hindurch, wobei das Eingangs-/Ausgangselement einen Reißverschluss, einen Klettverschluss oder ein anderes geeignetes Verschlusssystem aufweisen kann.

Vor diesem Hintergrund liegt der vorliegenden Erfindung die Aufgabe zugrunde, verbesserte gewichtssparende Lösungen zur Abtrennung von begrenzten Kabinenbereichen von Luftfahrzeugen zu finden, die sich möglichst einfach und schnell auch noch während des Betriebs auf- und abbauen lassen.

Erfindungsgemäß wird diese Aufgabe gelöst durch einen aufblasbaren Trennbereich mit den Merkmalen des Patentanspruchs 1 sowie durch ein Luftfahrzeug mit den Merkmalen des Patentanspruchs 14.

Eine der vorliegenden Erfindung zugrunde liegende Idee besteht darin, einen schnell und einfach auf- und abzubauenden abgetrennten Bereich für einen Fahrzeuginnenraum zu schaffen, indem aufblasbare flexible Schläuche als Stützstrukturen kombiniert werden mit dünnen flexiblen Wandmembranen, welche einen Innenraum des Trennbereichs von dem Fahrzeuginnenraum absondern. Die Schläuche dienen dabei gewissermaßen als stützendes bzw. tragendes Gerüst/Skelett vergleichbar zu den Zeltstangen eines Zeltes und definieren gleichzeitig eine Außenkontur des abzutrennenden Bereichs. Die Wandmembranen sorgen für die eigentliche Abtrennung des derart geschaffenen Innenraums von dem Fahrzeuginnenraum, insbesondere in horizontaler Richtung.

Zur Montage können die Schläuche mit einem oder mehreren Ventilen versehen sein, über welche das System mit einer Luftpumpe, einem Blasebalg, einer Gaskartusche und/oder einem Kompressor an geeigneter Position aufpumpbar sein kann. Prinzipiell können hierzu auch bereits an Bord des Fahrzeugs vorhandene Systeme genutzt werden, welche kurzfristig Druckluft bereitstellen können, z.B. ein Luftaufbereitungssystem und/oder ein Kompressor-System eines Flugzeugs. Sobald die Schläuche ausreichend aufgeblasen sind, spannen sie die dazwischenliegenden Wandmembranen auf, welche dann die Wände des Trennbereichs bilden. Spezielle weitere Werkzeuge oder Hilfsmittel werden für die Installation nicht zwingend benötigt. Die konkrete Aufstellposition kann hierbei je nach Innengestaltung des Fahrzeuginnenraums besonders flexibel auch kurzfristig wählbar sein.

Die derart geschaffene Trennkabine bzw. Trennzelle kann innerhalb des Fahrzeuginnenraums für unterschiedlichste Zwecke eingesetzt werden, wobei die einfache Konstruktion einen Auf- und/oder Abbau des Systems auch sehr kurzfristig während des Betriebs des Fahrzeugs gestattet. Solange der Trennbereich nicht benutzt wird, kann dieser in zusammengefalteter Form platzsparend verstaut werden. Hierbei macht man sich zunutze, dass der Aufbau des Systems in besonders gewichtssparender Weise realisiert werden kann, indem für das flexible Material der Schläuche und Wandmembranen geeignete dünne Materialien verwendet werden, die gleichzeitig entsprechende Sicherheitsanforderungen hinsichtlich Entflammbarkeit, Altersbeständigkeit, Reißfestigkeit, Umweltverträglichkeit usw. erfüllen können. Dabei kann das System je nach Bedarf auch mehrmals verwendet werden. Beispielweise kann der Trennbereich an Bord eines sich bereits in der Luft befindlichen Flugzeugs aufgebaut werden, um einen oder mehrere Passagiere von den übrigen Passagieren zu isolieren, z.B. im Falle eines medizinischen Notfalls, einer hochansteckenden Infektion oder dergleichen. Es versteht sich dabei jedoch, dass ein aufblasbarer Trennbereich im Sinne der Erfindung nicht nur als Schutzmaßnahme für medizinzische bzw. infektiologische Anwendungen eingesetzt werden kann. Weiterhin können mittels der Erfindung kurzfristig, aber auch dauerhaft, Ruhezonen in einer Passagierkabine geschaffen werden, sei es für Passagiere, sei es für das Bordpersonal. Je nach dem konkreten Anwendungsfall können die Wandmembranen der Hülle dabei durchsichtig oder mehr oder weniger undurchsichtig gestaltet sein.

Vorteilhafte Ausgestaltungen und Weiterbildungen ergeben sich aus den weiteren Unteransprüchen sowie aus der Beschreibung unter Bezugnahme auf die Figuren.

Gemäß einer Weiterbildung kann der Trennbereich in dem aufgeblasenen Zustand nach oben und unten hin offen ausgebildet sein. Beispielsweise kann der Trennbereich lediglich auf allen horizontalen Seiten von den Wandmembranen umgeben sein und auf einem Boden des Fahrzeuginnenraums aufsitzen. Eine verbleibende Öffnung nach oben hin kann beispielsweise zur Luftzufuhr genutzt werden. Ebenso kann es vorgesehen sein, dass der Trennbereich nach oben und unten passgenau mit einem Boden und einer Decke des Fahrzeuginnenraums abschließt.

Im Prinzip ist es zudem denkbar, dass der Trennbereich nicht auf allen horizontalen Seiten geschlossen ist, sondern lediglich auf denjenigen Seiten Wandmembranen aufweist, welche in den Fahrzeuginnenraum hinein ausgerichtet sind und nicht bereits ohnehin durch Innenwände des Fahrzeuginnenraums begrenzt werden. Anders formuliert kann es in bestimmten Anwendungen vorgesehen sein, eine oder mehrere Innenwände der Fahrzeugkabine als Außenwände des Trennbereichs zu nutzen. In diesem Fall könnte beispielsweise eine Außenwand des Fahrzeugs nicht durch die Wandmembranen abgedeckt sein und diese könnten lediglich gangseitig und nach vorn und hinten vorgesehen sein.

Gemäß einer Weiterbildung können die Tragkonstruktion und die Hülle dazu ausgebildet sein, den Trennbereich nach oben und unten hin zumindest bereichsweise passgenau mit dem Fahrzeuginnenraum abzuschließen.

Der Trennbereich kann somit rundherum auf dem Boden des Fahrzeuginnenraums aufsitzen und an eine Decke anstoßen, ohne dass eine (zumindest randseitige) Öffnung zum Fahrzeuginnenraum hin verbleibt. Eine Luftzufuhr in den Trennbereich kann in diesem Fall beispielsweise über oben und unten (prinzipiell aber auch seitlich) angeordnete und in die Wandmembranen eingelassene Luftschlitze oder dergleichen erfolgen. Die Luft kann über Luftauslässe in einer über dem Trennbereich liegenden Decke des Fahrzeuginnenraums herbeigeführt und über entsprechende Luftablässe im Boden des Fahrzeuginnenraums wieder abgelassen werden. Alternativ kann es vorgesehen sein, dass der Trennbereich nach oben und/oder unten hin nicht vollständig mit dem Fahrzeuginnenraum abschließt, sondern Lüftungsschlitze verbleiben, über die der Trennbereich mit dem Fahrzeuginnenraum luftdurchlässig verbunden bleibt. Weiterhin können alternativ oder zusätzlich Lüftungselemente in die Tragkonstruktion und/oder die Hülle des Trennbereichs integriert sein.

Gemäß einer Weiterbildung können mindestens drei der Schläuche als im Wesentlichen vertikalverlaufende Streben ausgebildet sein. Weitere Schläuche können als Querverbindungen der Streben dienen.

Beispielsweise kann der Trennbereich einen rechteckigen Grundriss aufweisen, wobei vier im Wesentlichen vertikal verlaufende Schläuche Außenkanten des Trennbereichs bilden und diese an einem oberen Ende von vier querverlaufenden Schläuchen zusammengehalten werden. Es versteht sich jedoch, dass auch komplexere Außengeometrien und/oder Schlauchanordnungen möglich sind.

Gemäß einer Weiterbildung können drei vertikalverlaufende Schläuche als Außenkanten des Trennbereichs an einem oberen Ende an drei Ecken eines durch vier querverlaufende Schläuche gebildeten Vierecks angebunden sein.

In dieser Weiterbildung wird sich die Erkenntnis zunutze gemacht, dass prinzipiell drei Außenstreben eine ausreichende Stabilität bzw. Standfestigkeit für einen Trennbereich bieten können, sofern diese an einem oberen Ende von entsprechenden Querverbindungen zusammengehalten werden. Die hierdurch offen bzw. frei gehaltene vierte Kante der Struktur kann beispielsweise als Ausgangs- bzw. Eintrittsbereich genutzt werden, sodass mehr Bewegungsfreiraum verbleiben kann als im Falle, dass eine vierte vertikal verlaufende Strebe vorgesehen wäre. Dies kann beispielsweise im Falle von Notfällen besonders vorteilhaft sein, damit der Trennbereich möglichst einfach und unkompliziert verlassen werden kann.

Die Standfestigkeit dieser an ein Dreibein erinnernden Anordnung kann weiter verbessert werden, indem beispielsweise ein Befestigungselement an einem oberen Ende vorgesehen wird, insbesondere im Bereich der "offenen Kante", an welcher kein vertikalverlaufender Schlauch vorhanden ist, und dort beispielsweise an einer Wand und/oder Deck des Fahrzeuginnenraums fixiert wird.

Gemäß einer Weiterbildung kann zumindest ein Anteil der Schläuche zur Anpassung an eine Innenkontur des Fahrzeuginnenraums geknickt und/oder gekrümmt ausgebildet sein.

Die durch die Schläuche definierte Außenkontur des Trennbereichs kann sich somit mehr oder weniger genau an eine Innenkontur des Fahrzeuginnenraums anschmiegen. Damit kann einerseits der vorhandene Raum optimal ausgenutzt werden. Andererseits kann der Trennbereich somit in besonders vorteilhafter Weise von Innenwänden oder anderen Strukturen des Fahrzeuginnenraums gestützt und stabilisiert werden, sodass der Trennbereich auch bei ruckartigen Bewegungen des Fahrzeugs möglichst in einer gewünschten Position verharrt.

Gemäß einer Weiterbildung können die Schläuche ein gemeinsam aufblasbares Volumen bilden.

Damit kann die Tragkonstruktion des Trennbereichs ggf. über ein einzelnes Ventil unter Druck gesetzt werden, z.B. vergleichbar zu einer Luftmatratze, bei welcher mehrere miteinander verbundene Luftkammern über ein einzelnes Ventil mit Luft befüllt werden können.

Gemäß einer Weiterbildung können die Wandmembranen zumindest bereichsweise transparent und/oder transluzent ausgebildet sein.

Beispielsweise kann eine durchsichtige Wandmembran in einer medizinischen Anwendung ermöglichen, dass ein Patient bzw. Passagier von außerhalb des Trennbereichs ärztlich beobachtet werden kann. Andererseits kann es im Falle einer Nutzung des Trennbereichs als Ruhebereich oder Schlafkoje gerade unerwünscht sein, dass der Trennbereich einsehbar ist. In diesem Fall würde man sich somit für undurchsichtige Wandmembranen entscheiden.

Als weiterer Vorteil ergibt sich hierbei, dass der Trennbereich bei ausreichend transparenter Ausführung bei der Landung geschlossen stehen bleiben kann. Dementgegen müssen die typischerweise in Flugzeugen verwendeten undurchsichtigen Vorhänge stets geöffnet werden. Das vorliegende System kann hingegen aufgrund der Verwendung von transparentem Material einsehbar gestaltet sein. Die luftgefüllten Elemente stellen dabei keine Verletzungsgefahr da. Hinzu tritt eine leichte Bauweise und ggf. schnelle Öffnungsmöglichkeiten, beispielsweise durch einen leicht zu öffnenden Reißverschluss.

Gemäß einer Weiterbildung können die Wandmembranen jeweils eine flammenhemmende thermoplastische Kunststofffolie aufweisen.

Beispielsweise können extrudierte Folien aus unterschiedlichen Polymerzusammensetzungen mit der Eignung für eine thermoplastische Verarbeitung verwendet werden, die entsprechende mechanische (z.B. Festigkeit, Abriebbeständigkeit, Flexibilität), chemische (z.B. feuerdämmend bzw. feuerfest, chemikalienbeständig) und/oder biologische Eigenschaften bereitstellen (z.B. Umweltverträglichkeit, Eignung für medizinische Anwendungen). In einem konkreten Beispiel kann eine Polyurethanfolie aus Polyester oder Polyether derartige Eigenschaften erfüllen.

Gemäß einer Weiterbildung können die Wandmembranen und die Schläuche aus dem gleichen flexiblen Material gefertigt sein.

Der Trennbereich kann somit insbesondere vollständig aus einem bestimmten geeigneten Material gewissermaßen "en bloc" gefertigt sein, wobei eine einheitliche Optik geschaffen wird, bei welcher die Tragkonstruktion und die Hülle die gleichen vorteilhaften Eigenschaften aufweisen. Ferner können die Wandmembranen mit den Schläuchen verschweißt, verklebt und/oder vernäht sein. Beispielsweise können in einer medizinischen Anwendung sowohl die Schläuche als auch die Wandmembranen aus dem gleichen transparenten oder semi-transparentem Material bestehen.

Gemäß einer Weiterbildung kann zumindest eine der Wandmembranen mit einer wiederverschließbaren Durchgangsöffnung zum Betreten und Verlassen des Trennbereichs durch Personen ausgebildet sein.

Der Durchgang kann beispielsweise von medizinischem Personal genutzt werden, um einen Patienten zu inspizieren. Ebenso kann ein derartiger Durchgang als Notausgang vorgesehen sein.

Gemäß einer Weiterbildung kann die Durchgangsöffnung über einen Reißverschluss wiederverschließbar sein.

Reißverschlüsse, insbesondere bestimmte Sicherheitsreißverschlüsse, können als ggf. wiederverwendbare Sicherheitsöffnungssysteme eine schnelle und kontrollierte Öffnung von Notausgangsöffnungen gewährleisten. Zum Schutz gegen Hitze und Flammen können beispielsweise Reißverschluss-Elemente aus flammhemmendem Polyamid mit einem Band aus Aramidfasern kombiniert werden.

Es versteht sich dabei jedoch, dass je nach Anwendung grundsätzlich auch andere Verschließsystem zum Einsatz kommen können, z.B. Klettverschluss, Druckknöpfe, Magnete etc.

Gemäß einer Weiterbildung dann die Trenneinrichtung weiterhin eine Druckkontrolleinrichtung aufweisen, welche dazu ausgebildet ist, einen Innendruck der Schläuche zu kontrollieren.

Beispielsweise kann die Druckkontrolleinrichtung eine mit einem Drucksensor gekoppelte Anzeige umfassen, welche eine aktuellen Innendruck der Schläuche anzeigt, sodass jederzeit überprüft werden kann, ob der Innendruck in einem geeigneten Druckintervall liegt bzw. einen geeigneten Wert aufweist. Ferner kann die Druckkontrolleinrichtung ein Ventil aufweisen, über welches der Innendruck der Schläuche eingestellt werden kann bzw. welches einen bestimmten gewünschten Innendruck vorgibt.

Dementsprechend kann die Druckkontrolleinrichtung unter anderem dazu genutzt werden, den Druck einmalig beim Aufstellen der Trenneinrichtung geeignet einzustellen. Prinzipiell kann dann im weiteren Betrieb nachkorrigiert werden, sofern eine relevante Druckänderung, z.B. ein Druckabfall, in den Schläuchen angezeigt wird.

Wird die Trenneinrichtung der Erfindung beispielsweise in der Luft während des Flugs eines Luftfahrzeugs aufgebaut, so kann von dem Bordpersonal sichergestellt werden, dass der Innendruck der Schläuche ausreichend bemessen ist, um eine Standfestigkeit der Trenneinrichtung auch gegenüber den im weiteren Verlauf des Betriebs zu erwartenden Druckänderungen im Fahrzeuginnenraum zu gewährleisten. So kann es beispielsweise gefordert sein, dass die Trenneinrichtung bis zur Landung stehen bleibt. Der Innendruck der Schläuche kann hierzu direkt beim Installieren bzw. Aufbauen der Trenneinrichtung derart vom Personal (einmalig) gezielt mit einem Überdruck eingestellt werden, dass die Trenneinrichtung auch noch nach der Landung und dem damit verbundenen Druckanstieg in der Kabine stabil stehen bleibt. Falls notwendig kann mit Hilfe der Druckkontrolleinrichtung der aktuelle Druck jedoch im Betrieb jederzeit kontrolliert und ggf. nachgeregelt werden.

Prinzipiell kann die Druckkontrolleinrichtung darüber hinaus auch zur (ggf. automatischen) Regelung des Innendrucks der Schläuche ausgebildet sein. Allerdings kann in einfachen Ausgestaltungen der Erfindungen eine Nachregelung des Drucks auch beispielsweise händisch durch das Bordpersonal erfolgen und die Druckkontrolleinrichtung lediglich der Anzeige des aktuellen Innendrucks dienen.

Gemäß einer Weiterbildung können die Tragkonstruktion und die Hülle dazu ausgebildet sein, in dem aufgeblasenen Zustand zumindest einen Sitz des Fahrzeuginnenraums zu umgeben.

In diesem Fall kann somit ein Sitz einer Sitzreihe in einem Fahrzeug samt dem dort sitzenden Passagier gegenüber dem Fahrzeuginnenraum isoliert werden. Beispielsweise kann ein Fensterplatz in einer Zweier- oder Dreierreihe in einem Flugzeug abgetrennt werden. Ebenso können mehrere oder alle Sitze einer Sitzreihe gegenüber dem Fahrzeuginnenraum und den davor bzw. dahinter liegenden Sitzreihen getrennt werden.

Gemäß einer Weiterbildung kann zumindest eine der Wandmembranen mit Durchführungen für Elemente von angrenzenden Sitzstrukturen des Fahrzeuginnenraums ausgebildet sein.

Häufig sind die einzelnen Sitze in einer Sitzreihe eines Flugzeugs fest miteinander verbunden, z.B. an Sitzgestell, Armlehne und/oder Sitzfläche. Damit der Trennbereich auch noch nachträglich um einen oder mehrere Passagiersitze herum installiert werden kann, können somit eine oder mehrere Durchführungen in den Wandmembranen vorgesehen sein. Beispielsweise können die Wandmembranen zudem geeignet geschlitzt sein, sodass jede Wandmembran um die entsprechende Struktur des Sitzes gelegt werden kann. Geeignete Verschlusssysteme wie Klett, Druckknöpfe oder Reißverschlüsse können dann genutzt werden, um verbleibende Lücken oder Ritzen zwischen der oder den Wandmembranen und der Sitzstruktur zu verschließen.

Gemäß einer Weiterbildung kann der Trennbereich weiterhin zumindest ein Befestigungselement zur Positionsfixierung des Trennbereichs in dem Fahrzeuginnenraum aufweisen.

Insbesondere kann das Befestigungselement ein Saugnapf und/oder ein Haken oder ein ähnliches geeignetes Hilfsmittel sein.

Auch wenn die Tragkonstruktion den Trennbereich grundsätzlich ausreichend stabilisieren bzw. stützen kann, kann es zusätzlich von Vorteil sein, wenn der Trennbereich darüber hinaus über ein oder mehrere Elemente beispielsweise an einer Wand und/oder einer Decke des Fahrzeuginnenraums fixiert werden kann. Dies kann beispielsweise aus sicherheitstechnischer Hinsicht Vorteile bieten, z.B. bei unvorhergesehenen ruckartigen Bewegungen des Fahrzeugs, damit die Positionierung und Orientierung des Trennbereichs jederzeit eingehalten wird.

Hierbei stellen Saugnäpfe eine beispielhafte und vorteilhafte Möglichkeit dar, welche eine Fixierung an praktisch beliebigen Flächen erlaubt, die wieder entfernt werden kann, ohne Spuren zu hinterlassen. Es versteht sich, dass alternativ oder zusätzlich auch andere Befestigungselemente zum Einsatz kommen können, z.B. Haken, Bänder, Schlaufen, Klebehalter usw. Beispielsweise könnte das System über einen Haken-Handlauf an einem Gepäckfach befestigt werden.

Die vorliegende Erfindung wird nachfolgend anhand der in den schematischen Figuren angegebenen Ausführungsbeispiele näher erläutert. Es zeigen dabei:
- Fig. 1: schematische Schnittansicht eines aufblasbaren Trennbereichs gemäß einer Ausführungsform der Erfindung;
- Fig. 2: schematische Perspektivansicht des Trennbereichs aus Fig. 1 von schräg außen;
- Fig. 3: schematische Perspektivansicht des Trennbereichs aus Fig. 1 von schräg innen;
- Fig. 4: schematische Schnittansicht eines aufblasbaren Trennbereichs gemäß einer weiteren Ausführungsform der Erfindung;
- Fig. 5: schematische Perspektivansicht des Trennbereichs aus Fig. 4 von schräg außen;
- Fig. 6: schematische Perspektivansicht des Trennbereichs aus Fig. 4 von schräg innen; und
- Fig. 7: schematische Draufsicht auf eine Passagierkabine eines Luftfahrzeugs mit einem Trennbereich gemäß der Fig. 1 oder 4.

Die beiliegenden Figuren sollen ein weiteres Verständnis der Ausführungsformen der Erfindung vermitteln. Sie veranschaulichen Ausführungsformen und dienen im Zusammenhang mit der Beschreibung der Erklärung von Prinzipien und Konzepten der Erfindung. Andere Ausführungsformen und viele der genannten Vorteile ergeben sich im Hinblick auf die Zeichnungen. Die Elemente der Zeichnungen sind nicht notwendigerweise maßstabsgetreu zueinander gezeigt.

In den Figuren der Zeichnung sind gleiche, funktionsgleiche und gleich wirkende Elemente, Merkmale und Komponenten - sofern nichts anderes ausgeführt ist - jeweils mit denselben Bezugszeichen versehen.

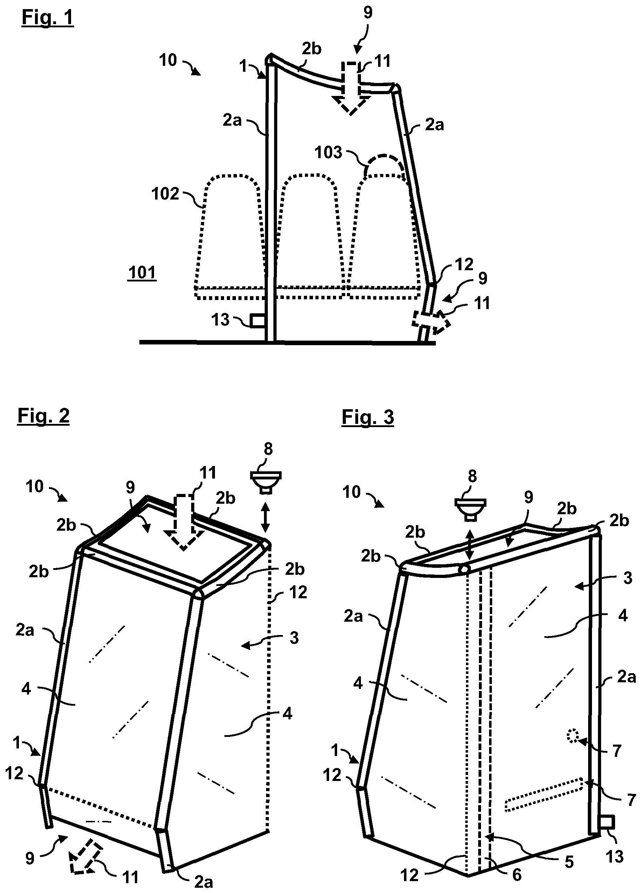

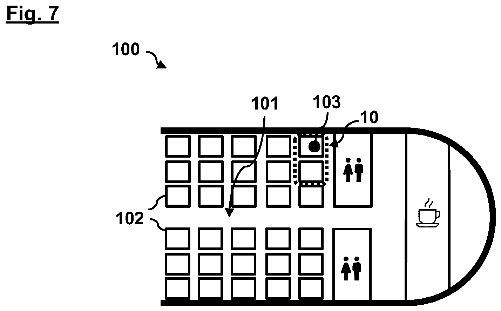

Figur 1 zeigt eine schematische Schnittansicht eines aufblasbaren Trennbereichs 10 gemäß einer Ausführungsform der Erfindung, welcher der Abtrennung eines begrenzten Bereichs in einem Fahrzeuginnenraum 101 dient. Fig. 2 und 3 zeigen schematische Perspektivansichten des Trennbereichs aus Fig. 1 von schräg außen bzw. schräg innen. Der aufblasbare Trennbereich 10 kann beispielsweise in einer Passagierkabine eines Luftfahrzeugs 100 genutzt werden, wie es beispielhaft in Fig. 7 zu sehen ist. In der gezeigten Ausführungsform dient der Trennbereich 10 als Isolierkabine bzw. Isolierzelle zur Einschließung symptomatischer Fälle, z.B. um eine Person für die verbleibende Zeit eines Fluges zum Schutz der weiteren Passagiere zu isolieren. Beispielsweise kann der Trennbereich 10 eingesetzt werden, wenn bei einem Passagier der Verdacht auf eine hochansteckende Krankheit besteht bzw. diese bereits nachgewiesen ist.

Um das Risiko für die Verbreitung von Krankheitserregern durch Personen, die Symptome einer ansteckenden Erkrankung zeigen, zu minimieren, kommen in der Praxis verschiedenen Ansätze zum Einsatz. Einige gängige Ansätze zur Verhinderung der Ausbreitung von Krankheitserregern umfassen die Sicherstellung räumlicher Abstände zwischen Personen, die Reduzierung von Kontaktmöglichkeiten sowie die Durchsetzung persönlicher Schutzausrüstung wie beispielsweise Atemschutzmasken. So empfiehlt beispielsweise die IATA, wie auch andere Organisationen beim Verdacht auf eine ansteckende Erkrankung während eines Fluges einen Abstand von zwei Metern zwischen kranken Passagieren und anderen Passagieren einzuhalten. Diesen Empfehlungen ist gemein, dass ein erheblicher Anteil an Sitzplätzen nicht mehr genutzt werden kann.

Ein Ziel des im Folgenden beschriebenen Trennbereichs 10 ist es, eine physikalische Barriere für einen oder mehrere möglicherweise infektiöse Personen bereitzustellen, welche auch noch während des Flugs schnell und einfach aufgebaut werden kann und keine Gewichtsnachteile mit sich bringt. Dabei ist der Trennbereich 10 insbesondere nicht auf eine fest vorgebebene Position in dem Fahrzeuginnenraum 101 beschränkt, sondern kann grundsätzlich an unterschiedlichen Standorten aufgestellt werden. Der Trennbereich 10 kann mehrfach verwendet werden und sollte hierzu ggf. desinfiziert werden.

In dem Ausführungsbeispiel der Fig. 7 separiert der Trennbereich 10 zwei Sitze 102 der letzten Sitzreihe auf der rechten Gangseite vor den sanitären Einrichtungen. Ein potenziell infektiöser Passagier 103 sitzt auf dem Fensterplatz innerhalb des Trennbereichs 10. Fig. 1 zeigt die Situation in einer Schnittansicht von hinten bezogen auf eine Längserstreckung des Flugzeugs 100.

Der Trennbereich 10 umfasst eine Tragkonstruktion 1, welche mehrere miteinander verbundene aufblasbare Schläuche 2a, 2b aus einem flexiblen Material aufweist, die dazu angeordnet und ausgebildet sind, in einem aufgeblasenen Zustand eine selbststützende Rahmenstruktur für den Trennbereich 10 zu bilden. Wie Fig. 1 bis 3 entnommen werden kann, sind in dieser Ausführung konkret drei im Wesentlichen vertikal verlaufende Schläuche 2a vorgesehen, welche auf einem Boden des Flugzeugs 100 stehen und dabei eine Art Dreibein bilden. An einem oberen Ende werden sie von einem Ring bzw. Quadrat aus vier querverlaufenden Schläuchen 2b zusammengehalten.

Die Schläuche 2a, 2b bilden dabei ein gemeinsames Volumen, welches über ein geeignet angebrachtes Ventil mittels einer Handpumpe, eines kleinen Kompressors und/oder einer an Bord des Luftfahrzeugs 100 installierten Druckluftquelle mit Luft gefüllt werden kann. Die Trenneinrichtung 10 umfasst weiterhin einen Druckkontrolleinrichtung 13, welche zur Kontrolle und/oder Einstellung eines Innendrucks der Schläuche 2a, 2b genutzt werden kann. Zu diesem Zweck kann die Druckkontrolleinrichtung 13 beispielsweise einen Drucksensor und eine Druckanzeige umfassen. Ferner kann das oben erwähnte Ventil in die Druckkontrolleinrichtung 13 integriert sein.

Durch die Druckbeaufschlagung versteifen sich die Schläuche 2a, 2b und bilden dadurch eine Art selbsttragendes Gerüst oder Skelett, welches eine Außenkontur des Trennbereichs 10 vorgibt und diesem Stabilität und Standfestigkeit verleiht. Der Innendruck der Schläuche 2a, 2b kann dabei bereits bei der Aufstellung der Trenneinrichtung 10 einmalig derart eingestellt werden, dass die Trenneinrichtung 10 auch bei Druckänderungen innerhalb des Fahrzeugsinnenraums 101 weiterhin stabil stehen bleibt, z.B. auch noch nach der Landung des Luftfahrzeugs 100.

Die vertikalen Schläuche 2a sind dabei beispielhaften teilweise mit Knicken 12 versehen, während die querverlaufenden Schläuche 2b leicht gekrümmt ausgebildet sind, um einer Innenkontur des Fahrzeuginnenraums 101 möglichst zu folgen. In dem konkreten Ausführungsbeispiel der Fig. 1 bis 3 ist der zum Gang hin liegende vertikale Schlauch 2a gerade ausgeführt, wohingegen die beiden gegenüberliegenden Schläuche 2a an einer Außenwand des Flugzeugs 101 anliegen und dazu geknickt sind und entsprechend leicht schräg entlang der Außenwand verlaufen. Die querverlaufenden Schläuche 2b sind dabei an die untere Kontur eines darüber liegenden Verstau- bzw. Gepäckfachs (nicht dargestellt) angepasst. Die Tragkonstruktion 10 schließt dadurch oben und unten prinzipiell passgenau mit der Innenkontur des Fahrzeuginnenraums 101 ab, wobei die vertikalen Schläuche 2a auf dem Boden aufstehen und die querverlaufenden Schläuche 2b an der Decke bzw. dem Verstaufach anliegen.

Der Trennbereich 10 umfasst weiterhin eine Hülle 3, welche mehrere flexible Wandmembranen 4 umfasst, die die aufblasbaren Schläuche 2a, 2b flächig miteinander verbinden und dazu ausgebildet sind, den Trennbereich 10 in dem aufgeblasenen Zustand gegenüber dem Fahrzeuginnenraum 101 abzutrennen. Beispielsweise können die Wandmembranen 4 hierbei aus einer transparenten oder semi-transparenten flammenhemmenden thermoplastischen Kunststofffolie gefertigt sein. Die Schläuche 2a, 2b der Tragkonstruktion 1 können aus dem gleichen Material gefertigt und mit den Wandmembranen 4 beispielsweise verschweißt sein.

In der Summe wird somit eine abgetrennte Zelle gebildet, deren tragende Struktur durch die Schläuche 2a, 2b und deren Außenwände durch die Wandmembranen 4 gebildet werden. Nach oben und unten hin ist der Trennbereich 10 offen gehalten, wobei eine oben liegender Luftdurchlass 9 den Eintritt von Frischluft 11 aus dem Belüftungssystem des Flugzeugs 100 ermöglicht. An der Fensterseite des Fahrzeuginnenraums 101 (rechts in Fig. 1 und links in Fig. 2) ist ferner ein schlitzförmiger Luftdurchlass 9 in Bodennähe vorgesehen, durch den Frischluft 11 wieder aus dem Trennbereich 10 herausströmen kann (in diesem Bereich schließt die Hülle 3 somit nicht passgenau mit dem Boden ab).

Die Luftzufuhr kann dabei derart geregelt sein, dass sich durch die Strömungsverhältnisse effektiv ein geringer Unterdruck innerhalb des Trennbereichs 10 eingestellt wird, sodass beispielsweise Viren oder andere Krankheitserreger nicht aus dem Trennbereich 10 austreten, selbst wenn dieser nicht luftdicht gegenüber dem Fahrzeuginnenraum 101 abgeschlossen ist.

Ein sich in dem Trennbereich 10 befindender Passagier 103 hat aufgrund der nach oben hin geöffneten Anordnung weiterhin Zugriff auf eine Passagier-Serviceeinheit (PSU), Notfall-Sauerstoffmasken etc.

In der Ausführungsform der Fig. 1 bis 3 ist ferner eine wiederverschließbare Durchgangsöffnung 5 zum Betreten und Verlassen des Trennbereichs 10 in einer der Wandmembranen 4 eingearbeitet, welche über einen Reißverschluss 6 geöffnet und geschlossen werden kann. Auf diese Weise ließe sich prinzipiell auch ein Notausgang aus dem Trennbereich 10 realisieren, z.B. durch Verwendung eines Sicherheitsreißverschlusssystems wie beispielsweise das Quickburst-System der YKK Fastening Products Group oder ein entsprechendes System.

Damit die Hülle 3 die beiden Sitze 102 vollständig umgeben kann, sind ferner mehrere Durchführungen 7 für Elemente des angrenzenden dritten Sitzes 102 in der gangseitigen Wandmembran 4 ausgebildet, z.B. zur Durchführung einer Armlehne und/oder eines Sitzgestells. Die Wandmembran 4 kann hierzu von einer oder mehreren Seiten hin zu den Durchführungen 7 geschlitzt ausgebildet sein (nicht dargestellt), damit die Wandmembran 4 um die entsprechenden Elemente geführt und ggf. in dieser Anordnung um diese herum befestigt werden kann (z.B. über Klettverschluss, Druckknöpfe etc.).

Wie bereits erwähnt wurde, wird der Trennbereich 10 der Fig. 1 bis 3 lediglich von drei im Wesentlichen vertikal verlaufenden Schläuchen 2a getragen. Um diese Anordnung weiter zu stabilisieren und insbesondere eine Positionsfixierung in dem Fahrzeuginnenraum 101 zu gewährleisten, kann der Trennbereich 10 ferner eines oder mehrere Befestigungselemente 8 umfassen. Beispielsweise kann es vorgesehen sein, dass die querverlaufenden Schläuche 2b über derartige Befestigungselemente 8 an einer Decke, einem Verstaufach und/oder einer Wand des Fahrzeuginnenraums 101 fixiert werden.

In Fig. 2 und 3 ist stellvertretend hierfür beispielhaft ein einzelnes Befestigungselement 8 abgebildet, welches als Saugnapf ausgebildet und in einem Bereich an der Tragkonstruktion 1 des Trennbereichs 10 angebracht ist, unter welchem aus Symmetriesicht eine vierte vertikale Stütze anzuordnen wäre. Anders formuliert, kompensiert das Befestigungselement 8 somit den fehlenden vertikal verlaufenden Schlauch 2a rechts in Fig. 2 bzw. vorne mittig in Fig. 3. Eine Fixierung über einen oder mehrere Saugnäpfe (z.B. aus Gummi bzw. Kautschuk) bietet dabei den besonderen Vorteil, dass der Trennbereich 10 praktisch in beliebigen Kabinen nachrüstbar und installierbar ist, ohne dass Befestigungsmittel und/oder besondere Befestigungspunkte in der Kabine vorhanden sein müssten.

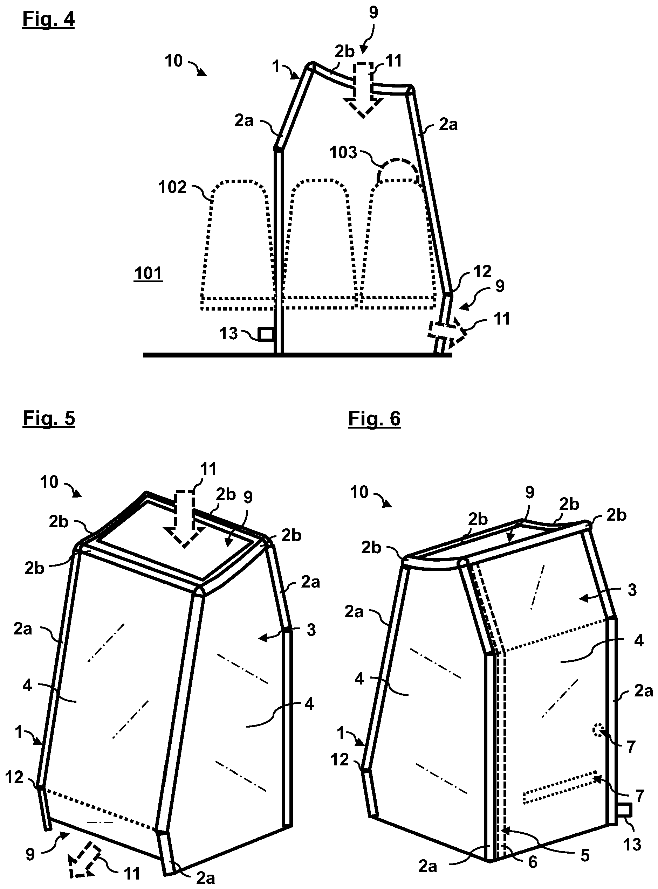

Als Alternative zu der Ausführungsform aus Fig. 1 bis 3 zeigen Fig. 4 bis 6 eine Variante der Erfindung, welche vier im Wesentlichen vertikal verlaufende Schläuche 2a aufweist. In diesem Beispiel sind auch die gangseitigen Schläuche 2a geknickt ausgebildet, beispielsweise um einer anderen Kabinenform oder unterschiedlichen geometrischen Anforderungen gerecht zu werden.

Dem Fachmann wird hierbei klar sein, dass durch entsprechende Knickung und Biegungen der Schläuche 2a, 2b völlig unterschiedlichen geometrischen Bedingungen entsprochen werden kann. Ebenso ist die gezeigte Anzahl und Orientierung der Schläuche 2a, 2b rein beispielhaft zu verstehen.

Im Ergebnis wird eine extrem leichtgewichtige (z.B. wenige Kilogramm) und dennoch besonders praktische Lösung für einen isolierten Bereich in einer Fahrzeugkabine geschaffen, welche zusammenfaltbar und in dieser Form auch stark platzsparend verstaut werden kann (z.B. in einer Tragetasche). Für die Installation werden lediglich eine Gerät zum Befüllen mit Luft (z.B. eine Luftpumpe) und ggf. ein oder mehrere Befestigungselemente wie z.B. Saugnäpfe oder Haken benötigt. Auch in sicherheitskritischer Hinsicht bietet das System aufgrund des geringen Gewichts, der Flexibilität, der schnellen Zugänglichkeit im Falle eines Notfalls usw. viele Vorteile. Zudem können anders als in herkömmlichen Ansätzen auch Sitzplätze in unmittelbarer Umgebung des Trennbereichs 10 belegt werden, ohne dass ein relevantes Sicherheits- und/oder Infektionsrisiko für die dort sitzenden Passagiere vorhanden wäre. Damit kann die Sitzplatzbelegung im Allgemeinen verbessert werden.

In der vorangegangenen detaillierten Beschreibung sind verschiedene Merkmale zur Verbesserung der Stringenz der Darstellung in einem oder mehreren Beispielen zusammengefasst worden. Es sollte dabei jedoch klar sein, dass die obige Beschreibung lediglich illustrativer, keinesfalls jedoch beschränkender Natur ist. Sie dient der Abdeckung aller Alternativen, Modifikationen und Äquivalente der verschiedenen Merkmale und Ausführungsbeispiele. Viele andere Beispiele werden dem Fachmann aufgrund seiner fachlichen Kenntnisse in Anbetracht der obigen Beschreibung sofort und unmittelbar klar sein.

Die Ausführungsbeispiele wurden ausgewählt und beschrieben, um die der Erfindung zugrundeliegenden Prinzipien und ihre Anwendungsmöglichkeiten in der Praxis bestmöglich darstellen zu können. Dadurch können Fachleute die Erfindung und ihre verschiedenen Ausführungsbeispiele in Bezug auf den beabsichtigten Einsatzzweck optimal modifizieren und nutzen. In den Ansprüchen sowie der Beschreibung werden die Begriffe "beinhaltend" und "aufweisend" als neutralsprachliche Begrifflichkeiten für die entsprechenden Begriffe "umfassend" verwendet. Weiterhin soll eine Verwendung der Begriffe "ein", "einer" und "eine" eine Mehrzahl derartig beschriebener Merkmale und Komponenten nicht grundsätzlich ausschließen.

### Bezugszeichenliste

- 1: Tragkonstruktion
- 2a, 2b: Schlauch
- 3: Hülle
- 4: Wandmembran
- 5: Durchgangsöffnung
- 6: Reißverschluss
- 7: Durchführung
- 8: Befestigungselement
- 9: Luftdurchlass
- 10: aufblasbarer Trennbereich
- 11: Luftzirkulation
- 12: Knick
- 13: Druckkontrolleinrichtung
- 100: Luftfahrzeug
- 101: Fahrzeuginnenraum
- 102: Sitz
- 103: Passagier

## Patentansprüche

1. Aufblasbarer Trennbereich (10) für einen Fahrzeuginnenraum (101), insbesondere für eine Passagierkabine eines Luftfahrzeugs (100), mit:
einer Tragkonstruktion (1), welche mehrere miteinander verbundene aufblasbare Schläuche (2a, 2b) aus einem flexiblen Material aufweist, die dazu angeordnet und ausgebildet sind, in einem aufgeblasenen Zustand eine selbststützende Rahmenstruktur für den Trennbereich (10) zu bilden; und
einer Hülle (3), welche mehrere flexible Wandmembranen (4) umfasst, die die aufblasbaren Schläuche (2a, 2b) flächig miteinander verbinden und dazu ausgebildet sind, den Trennbereich (10) in dem aufgeblasenen Zustand gegenüber dem Fahrzeuginnenraum (101) abzutrennen, wobei der Trennbereich (10) in dem aufgeblasenen Zustand nach oben hin offen ausgebildet ist, wobei die Tragkonstruktion (1) und die Hülle (3) dazu ausgebildet sind, den Trennbereich (10) nach oben hin zumindest bereichsweise passgenau mit dem Fahrzeuginnenraum (101) abzuschließen.

2. Aufblasbarer Trennbereich (10) nach Anspruch 1, wobei mindestens drei der Schläuche (2a) als im Wesentlichen vertikalverlaufende Streben ausgebildet sind, wobei weitere Schläuche (2b) als Querverbindungen der Streben dienen.

3. Aufblasbarer Trennbereich (10) nach Anspruch 2, wobei drei im Wesentlichen vertikalverlaufende Schläuche (2a) als Außenkanten des Trennbereichs (10) an einem oberen Ende an drei Ecken eines durch vier querverlaufende Schläuche (2b) gebildeten Vierecks angebunden sind.

4. Aufblasbarer Trennbereich (10) nach einem der Ansprüche 1 bis 3, wobei zumindest ein Anteil der Schläuche (2a, 2b) zur Anpassung an eine Innenkontur des Fahrzeuginnenraums (101) geknickt und/oder gekrümmt ausgebildet ist.

5. Aufblasbarer Trennbereich (10) nach einem der Ansprüche 1 bis 4, wobei die Schläuche (2a, 2b) ein gemeinsam aufblasbares Volumen bilden.

6. Aufblasbarer Trennbereich (10) nach einem der Ansprüche 1 bis 5, wobei die Wandmembranen (4) zumindest bereichsweise transparent und/oder transluzent ausgebildet sind.

7. Aufblasbarer Trennbereich (10) nach einem der Ansprüche 1 bis 6, wobei die Wandmembranen (4) jeweils eine flammenhemmende thermoplastische Kunststofffolie aufweisen.

8. Aufblasbarer Trennbereich (10) nach einem der Ansprüche 1 bis 7, wobei die Wandmembranen (4) und die Schläuche (2a, 2b) aus dem gleichen flexiblen Material gefertigt sind.

9. Aufblasbarer Trennbereich (10) nach einem der Ansprüche 1 bis 8, wobei zumindest eine der Wandmembranen (4) mit einer wiederverschließbaren Durchgangsöffnung (5) zum Betreten und Verlassen des Trennbereichs (10) durch Personen ausgebildet ist, wobei die Durchgangsöffnung (5) insbesondere über einen Reißverschluss (6) wiederverschließbar ist.

10. Aufblasbarer Trennbereich (10) nach einem der Ansprüche 1 bis 9, weiterhin mit einer Druckkontrolleinrichtung (13), welche dazu ausgebildet ist, einen Innendruck der Schläuche (2a, 2b) zu kontrollieren.

11. Aufblasbarer Trennbereich (10) nach einem der Ansprüche 1 bis 10, wobei die Tragkonstruktion (1) und die Hülle (3) dazu ausgebildet sind, in dem aufgeblasenen Zustand zumindest einen Sitz (102) des Fahrzeuginnenraums (101) zu umgeben.

12. Aufblasbarer Trennbereich (10) nach Anspruch 11, wobei zumindest eine der Wandmembranen (4) mit Durchführungen (7) für Elemente von angrenzenden Sitzstrukturen des Fahrzeuginnenraums (101) ausgebildet ist.

13. Aufblasbarer Trennbereich (10) nach einem der Ansprüche 1 bis 12, weiterhin mit zumindest einem Befestigungselement (8) zur Positionsfixierung des Trennbereichs (10) in dem Fahrzeuginnenraum (101).

14. Luftfahrzeug (100) mit einem aufblasbaren Trennbereich (10) nach einem der Ansprüche 1 bis 13.

## Claims

1. Inflatable separating region (10) for a vehicle interior (101), in particular for a passenger cabin of an aircraft (100), having:
a supporting structure (1) which has a plurality of interconnected inflatable tubes (2a, 2b) made of a flexible material and being arranged and designed so as, in an inflated state, to form a self-supporting frame structure for the separating region (10); and
a covering (3) which comprises a plurality of flexible wall membranes (4) which connect the inflatable tubes (2a, 2b) to one another in a planar manner and are designed to separate off the separating region (10) in the inflated state from the vehicle interior (101), wherein the separating region (10) in the inflated state is open upwards, wherein the supporting structure (1) and the covering (3) are designed to close off the separating region (10) upwards at least in regions in a precisely fitting manner with the vehicle interior (101).

2. Inflatable separating region (10) according to Claim 1, wherein at least three of the tubes (2a) are designed as substantially vertically running struts, with further tubes (2b) serving as transverse connections of the struts.

3. Inflatable separating region (10) according to Claim 2, wherein three substantially vertically running tubes (2a) as outer edges of the separating region (10) are connected at an upper end at three corners of a rectangle formed by four transversely running tubes (2b).

4. Inflatable separating region (10) according to one of Claims 1 to 3, wherein at least a portion of the tubes (2a, 2b) is kinked and/or curved for adaptation to an inner contour of the vehicle interior (101).

5. Inflatable separating region (10) according to one of Claims 1 to 4, wherein the tubes (2a, 2b) form a jointly inflatable volume.

6. Inflatable separating region (10) according to one of Claims 1 to 5, wherein the wall membranes (4) are transparent and/or translucent at least in regions.

7. Inflatable separating region (10) according to one of Claims 1 to 6, wherein the wall membranes (4) each have a flame-retarding thermoplastic film.

8. Inflatable separating region (10) according to one of Claims 1 to 7, wherein the wall membranes (4) and the tubes (2a, 2b) are manufactured from the same flexible material.

9. Inflatable separating region (10) according to one of Claims 1 to 8, wherein at least one of the wall membranes (4) is designed with a reclosable passage opening (5) to allow people to enter and leave the separating region (10), wherein the passage opening (5) is in particular reclosable by a zip fastener (6) .

10. Inflatable separating region (10) according to one of Claims 1 to 9, furthermore having a pressure control device (13) which is designed to control an internal pressure of the tubes (2a, 2b).

11. Inflatable separating region (10) according to one of Claims 1 to 10, wherein the supporting structure (1) and the covering (3) are designed so as, in the inflated state, to surround at least one seat (102) of the vehicle interior (101).

12. Inflatable separating region (10) according to Claim 11, wherein at least one of the wall membranes (4) is designed with feedthroughs (7) for elements of adjacent seat structures of the vehicle interior (101) .

13. Inflatable separating region (10) according to one of Claims 1 to 12, furthermore having at least one fastening element (8) for fixing the position of the separating region (10) in the vehicle interior (101) .

14. Aircraft (100) having an inflatable separating region (10) according to one of Claims 1 to 13.

## Revendications

1. Zone de séparation gonflable (10) destiné à un habitacle de véhicule (101), notamment à une cabine de passagers d'un aéronef (100), comprenant :
une construction de support (1) qui comporte plusieurs tuyaux gonflables (2a, 2b) en un matériau flexible qui sont reliés entre eux et qui sont conçus et disposés de manière à former une structure de cadre autoporteuse destinée à la zone de séparation (10) dans un état gonflé ; et une enveloppe (3) qui comprend plusieurs membranes flexibles formant paroi (4) qui relient les tuyaux gonflables (2a, 2b) les uns aux autres de manière sensiblement bidimensionnelle et qui sont conçues pour séparer la zone de séparation (10) de l'habitacle de véhicule (101) à l'état gonflé, la zone de séparation (10) étant conçue pour être ouverte vers le haut à l'état gonflé, la construction de support (1) et l'enveloppe (3) étant conçues pour fermer la zone de séparation (10) vers le haut au moins par zones avec l'habitacle de véhicule (101).

2. Zone de séparation gonflable (10) selon la revendication 1, au moins trois des tuyaux (2a) étant réalisés sous la forme de montants sensiblement verticaux, d'autres tuyaux (2b) servant de liaisons transversales des montants.

3. Zone de séparation gonflable (10) selon la revendication 2, trois tuyaux (2a) sensiblement verticaux étant reliés en tant que bords extérieurs de la zone de séparation (10) au niveau d'une extrémité supérieure à trois coins d'un carré formé par quatre tuyaux transversaux (2b).

4. Zone de séparation gonflable (10) selon l'une des revendications 1 à 3, au moins une partie des tuyaux (2a, 2b) étant pliée et/ou courbée pour s'adapter à un contour intérieur de l'habitacle de véhicule (101).

5. Zone de séparation gonflable (10) selon l'une des revendications 1 à 4, les tuyaux (2a, 2b) formant un volume gonflable commun.

6. Zone de séparation gonflable (10) selon l'une des revendications 1 à 5, les membranes formant parois (4) étant conçues pour être transparentes et/ou translucides au moins par zones.

7. Zone de séparation gonflable (10) selon l'une des revendications 1 à 6, les membranes formant parois (4) comportant chacune un film de matière synthétique thermoplastique ignifuge.

8. Zone de séparation gonflable (10) selon l'une des revendications 1 à 7, les membranes formant parois (4) et les tuyaux (2a, 2b) étant réalisées à partir de la même matière flexible.

9. Zone de séparation gonflable (10) selon l'une des revendications 1 à 8, au moins une des membranes formant parois (4) étant conçue avec une ouverture traversante refermable (5) pour permettre à des personnes d'entrer dans la zone de séparation (10) et d'en sortir, l'ouverture traversante (5) pouvant être refermée notamment par une fermeture éclair (6).

10. Zone de séparation gonflable (10) selon l'une des revendications 1 à 9, comprenant en outre un dispositif de commande de pression (13) qui est conçu pour commander la pression interne des tuyaux (2a, 2b).

11. Zone de séparation gonflable (10) selon l'une des revendications 1 à 10, la construction de support (1) et l'enveloppe (3) étant conçues pour entourer au moins un siège (102) de l'habitacle de véhicule (101) à l'état gonflé.

12. Zone de séparation gonflable (10) selon la revendication 11, au moins une des membranes formant parois (4) étant conçue avec des traversées (7) destinés à des éléments de structures de siège adjacentes de l'habitacle de véhicule (101).

13. Zone de séparation gonflable (10) selon l'une des revendications 1 à 12, comportant en outre au moins un élément de fixation (8) destiné à fixer la position de la zone de séparation (10) dans l'habitacle de véhicule (101) .

14. Aéronef (100) comprenant une zone de séparation gonflable (10) selon l'une des revendications 1 à 13.
